# EUROPEAN PATENT SPECIFICATION

(11) **EP 1 187 553 B1**
(45) Date of publication and mention of the grant of the patent: **11.08.2004**
(21) Application number: 00939230.9
(22) Date of filing: 30.05.2000
(51) Int. Cl.: A61B 5/00

(54) **ARRANGEMENT FOR MEASURING A PROPERTY OF A FLUID PRESENT IN A TUBE**
ANORDNUNG ZUR MESSUNG DER EIGENSCHAFT EINER FLÜSSIGKEIT IN EINER RÖHRE
SYSTEME DE MESURE DE LA PROPRETE D'UN FLUIDE PRESENT DANS UN TUBE

(30) Priority: 31.05.1999 SE 9901981
(43) Date of publication of application: 20.03.2002
(73) Proprietor: Gambro Lundia AB, 220 10 Lund (SE)
(72) Inventor: DROTT, Johan, S-222 20 Lund (SE)
(74) Representative: Bornegard, Annette
(86) International application number: PCT/SE2000/001132
(87) International publication number: WO 2000/072747

(56) References cited:
- WO-A1-95/25953
- US-A- 4 661 093
- US-A- 4 694 834
- US-A- 5 951 497

## Description

The present invention concerns an arrangement for measuring a property of a fluid present in a tube, with a sensor for measuring the desired property, which sensor is disposed on the tube and is in direct contact with the fluid through a lateral access.

### TECHNICAL BACKGROUND

Various implementations of arrangements for measuring a property of a fluid present in a tube are known. They are utilised in the most diverse apparatus, for example also in dialysis monitors, for measuring any properties of the fluid. To this end, they generally comprise a sensor, which is suitable for measuring the desired property. The measured properties of the fluid are, for instance, the temperature, the flow velocity, the pressure, the conductivity, etc.

However, measuring these properties of the fluid requires the sensor to be in direct contact with the fluid, which generally is established through a lateral access, i.e. a lateral opening in the tube. For this, the sensor is arranged on the tube in such a way that it protrudes at least partially into the tube through the lateral access and thus is in direct contact with the fluid which flows substantially completely around it. This is necessary for temperature sensors, for example, which must be substantially entirely surrounded by the fluid, or which have the fluid flow substantially entirely around them, in order to record an exact temperature.

The sensor may also be disposed on the tube such that it protrudes only into the lateral access, but not into the tube itself, so that it is in contact with the fluid, but the fluid does not flow completely around it or is, respectively, not entirely surrounded by fluid. This is adequate for example for sensors with electrodes for measuring the inductance of the fluid.

However, owing to the geometry of the tube it is difficult to provide a lateral access that, on the one hand, allows the direct contact of the sensor with the fluid and, on the other hand, is reliably sealed from the surroundings. Apart from the requisite direct contact with the fluid, the sensor disposed on the tube also needs a connection to an evaluating unit or the like, in order to relay the measured values to this.

To resolve the sealing problems, DE 35 08 570 suggests for example inserting a shut-off valve with plug in a tube, wherein the plug comprises a bore in the axis of rotation. A sensor is inserted in the bore and sealed with a sealing ring. Then, when for example as a result of the composition of the fluid, deposits build up with time on the sensor that is in direct contact with the fluid and impede the exact measurement of the required measured value, it is possible to replace the sensor without problems. To this end, the shut-off valve is set in its blocking position so that the fluid flow is interrupted and the sensor can be replaced without loss of fluid.

A disadvantage of this is that the tube must be completely severed during the installation of the shut-off valve. Thus after successful installation of the shut-off valve, additional seal surfaces with additional possible unsealed areas are created. Moreover, a shut-off valve entails an additional material expense in addition to the supplementary installation expense and thus causes additional costs.

An apparatus is known from DE 41 01 549 for measuring temperatures in tubes, wherein a bushing is welded laterally to a tube and forms a lateral access. A plug having a central bore is inserted in the bushing. Furthermore, a temperature sensor is screwed into the bushing and is pushed through the bore of the plug to the fluid and protrudes into the fluid. The plug, which seals the temperature sensor from the fluid, is specially worked on the side directed towards the fluid. This is intended to prevent the formation of gaps between plug and tube wall as breeding grounds for bacteria and other germs.

While this makes possible a reliable seal of the temperature sensor from the fluid, this seal however requires a larger amount of labour. Specifically, a lateral access to the tube must be provided, a bushing must be welded to the lateral access or the tube respectively, and the plug specially worked on the side directed towards the fluid, before the temperature sensor can be screwed into the bushing. This causes supplementary costs in addition to the additionally required material.

An arrangement for measuring the temperature of a fluid present in a tube is known from EP 413 198, wherein a bushing is similarly welded laterally to a tube and forms a lateral access to the fluid. An extensively worked ball valve is screwed into the bushing. A temperature sensor is pushed through the ball valve in the latter's open position up to the fluid in the tube, and is sealed against the fluid by ring seals before the ball valve and after the ball valve. In this way it is possible to replace the temperature sensor without shutting off the fluid. However, numerous seal surfaces are necessary, which increases the risk of leaks. In addition, this known arrangement is also expensive in terms of material and labour and is therefore costly.

A similar arrangement for monitoring ionic activity in biological fluids is known from document WO 9525953.

### SUMMARY OF THE INVENTION

In view of this background it is therefore an object of the present invention to provide an arrangement for measuring a property of a fluid present in a tube, with a sensor for measuring the property, which sensor is arranged on the tube and in direct contact with the fluid through a lateral access, that is simple and inexpensive to manufacture and in which the lateral access is reliably, simply and inexpensively sealed.

This object is achieved with an arrangement of the described type, wherein the tube includes a domed wall portion, the domed wall portion includes a seal surface on its outer side, the lateral access is formed in the seal surface, and the sensor is disposed in a sealed manner on the seal surface over the lateral access

In this way a simple arrangement is provided, which for example may be used in dialysis monitors and enables a simple and at the same time reliable seal of the lateral access on the tube. With the formation of the domed wall portion in the tube and the arrangement of a seal surface on the outer side of this domed wall portion, a large seal surface is provided that is formed substantially without edges and comers, on which the sensor can be simply disposed in a reliably sealed manner. The sensor is arranged over the lateral access, which is arranged in such a way in the seal surface, or which, respectively, terminates in such a way in the seal surface, that it is surrounded by the seal surface. In this manner, on the one hand, the lateral access is simply and reliably sealed by the sensor itself and, on the other hand, the sensor is brought easily into direct contact with the fluid. The sensor thus sits on the seal surface and is simultaneously in direct contact with the fluid.

By forming a domed wall portion and arranging a seal surface on the outer side of the same, there is in particular provided a larger seal surface that comprises no edges or corners and on which the sensor can sit. The arrangements known from the prior art having a lateral access in the tube generally include lateral seal surfaces having edges, corners or gaps. The sensor lies laterally against these seal surfaces, which renders a reliable seal difficult. This problem is removed by the present invention.

In particular when, in accordance with a preferred embodiment, the seal surface is a level surface, a further improved seal of the lateral access is made possible. A reliable seal can be obtained more easily on a level surface, and the sensor can simply be placed on the seal surface so that it covers the lateral access. When an appropriate seal is provided between sensor and seal surface, for example a sealing ring or even adhesion between sensor and seal surface, as provided in accordance with another preferred embodiment, the lateral access is then reliably sealed by the sensor itself.

The domed wall portion of the tube can be formed in any manner. For example, the whole tube can be bent to form the domed wall surface, as is provided according to a preferred embodiment. Similarly, the wall of the tube can be distended with a bulge on one side to form the domed wall portion, which is provided according to another preferred embodiment.

In both cases care should be taken that an adequately large domed wall portion is available to provide an adequately large seal surface on its outer side. Advantageously, in this case the wall of the tube forms the seal surface, which facilitates the manufacture further.

The lateral access to the interior of the tube arranged in the seal surface can be formed in any manner. However, it is advantageous, and provided according to a preferred embodiment, when the lateral access is formed by levelling away the wall of the tube at the outer side of the domed wall portion along a flat plane. In doing this it is advantageous when the domed wall portion is ground away at its outer side to form the lateral access. In this way the seal surface will simultaneously be formed with the lateral access so that the manufacture is still further simplified and the arrangement becomes altogether less expensive. Moreover, in this way a transition between the lateral access and the interior of the tube is provided that is favourable to flow, which is of particular advantage when the fluid present in the tube flows.

The lateral access can be formed in the described way both with an elastic and/or flexible tube, or also with a rigid tube. This arrangement is, however, particularly advantageous with a rigid tube, that for example can consist of metal, synthetic material or even glass. Particularly in the case of this last material the sealing of a lateral access was previously difficult and coupled with problems, which are now removed by the present invention.

Any sensors can be used in the arrangement, such as for example temperature sensors, pressure sensors, flow meters or even conductivity sensors. Furthermore the arrangement can be employed in diverse apparatus, such as in dialysis monitors.

### DESCRIPTION OF THE DRAWINGS

The invention will now be described in more detail with reference to the enclosed drawings, which depict preferred embodiments. These show in
Fig. 1 a longitudinal section through a first embodiment;
Fig. 2 a cross-section along the line B-B in Fig. 1;
Fig. 3 a longitudinal section through a second embodiment;
Fig. 4 a cross-section through a third embodiment;
Fig. 5 a cross-section through a fourth embodiment; and
Fig. 6 a section along the line A-A in Fig. 1 and Fig. 3.

### DESCRIPTION OF PREFERRED EMBODIMENTS

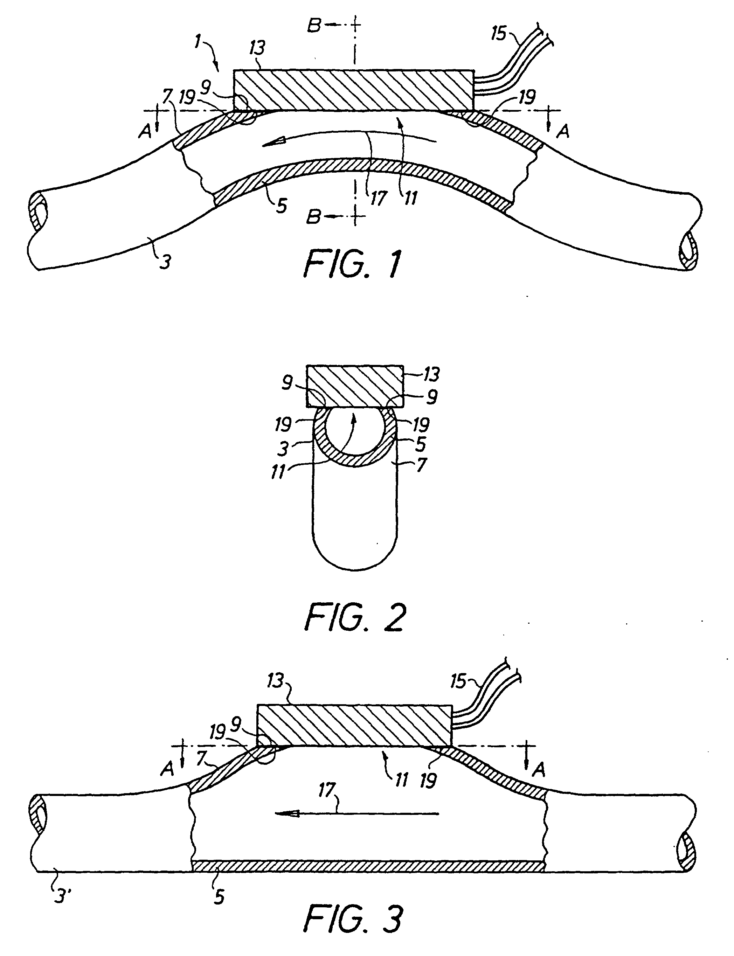

Fig. 1 shows a first embodiment of the measurement arrangement 1 in longitudinal section. The measurement arrangement 1 includes a sensor 13 that is disposed on a tube 3 to measure properties of a fluid 17 present in the tube 3. The fluid 17 can be either stationary in the tube or flow through it.

The tube 3 comprises a domed wall portion 7 that in this embodiment is formed by bending the whole tube 3. On its outer side the domed wall portion 7 has a seal surface 9, in which a lateral access 11 is arranged. In this embodiment, the seal surface 9 is formed together with the lateral access 11 by grinding away the outer side of the domed wall portion 7 along a flat plane. This plane is indicated by the dashed and dotted line A-A. The seal surface is thus formed by the ground away portion of the wall 5 of the tube 3. The form of the transition between the lateral access 11 and the interior of the tube 3 that is very favourable in fluid mechanical terms can be readily seen here, and is particularly advantageous when the fluid flows.

The sensor 13 is arranged on the seal surface 9 in such a manner that it completely covers and thus seals the lateral access 11. Simultaneously it is in direct contact with the fluid 17. The required seal between sensor 13 and seal surface 9 can be achieved in any desired manner. In the embodiment illustrated here, the sensor 13 is glued on the seal surface 9 by means of a suitable adhesive 19. However, it is also possible to provide, for example, a sealing ring or any other seal between the sensor 13 and the seal surface 9, whereby the sensor can then be attached to the tube 3 with any other suitable means.

The tube 3 consists here of glass but may consist of any other material such as plastic, metal or of an elastic material.

In the first embodiment of the measurement arrangement 1 shown here the sensor 13 is in direct contact with the fluid 17 present in the tube 3 through the lateral access 11 of the tube 3. In this way, the sensor 13 can directly determine or measure the desired property of the fluid 17 and relay the measured values by means of the electrical connections 15 to an evaluation unit or the like, which is not illustrated, where they can then be processed.

In Fig. 2 is shown a section along the line B-B of Fig. 1. As can be readily seen, the seal surface 9 is formed by the wall 5 of the tube 3 that has been levelled away along a flat plane on the outer side of the domed wall portion 7. As mentioned above, in this way the lateral access 11 to the interior of the tube 3 is formed at the same time as the seal surface 9, and a transition between the lateral access 11 and the interior of the tube 3 is obtained in a fluid-mechanically favourable fashion. The sensor 13 is arranged on the seal surface 9 above the lateral access 11 in such a manner that it completely covers, and therefore seals, the lateral access 11.

In Fig. 3 is shown a second embodiment of the measurement arrangement in longitudinal section. Like parts are denoted by like reference numerals. The tube 3' of this embodiment is not bent as a whole to form the domed wall portion 7. Instead, only a region of the wall of the tube 3' bulges outwardly to form the domed wall portion 7.

Furthermore, here also a seal surface 9 that is created by levelling away the outer side of the domed wall surface along a straight line A-A is formed on the outer side of the domed wall portion 7. As mentioned, in this way the lateral access 11 is formed at the same time. The sensor 13 is then, in turn, arranged on the seal surface 9 such that it completely covers, and accordingly seals, the lateral access 11, while being simultaneously in direct contact with the fluid 17. A seal between sensor 13 and seal surface 9 is accomplished in this embodiment also by gluing the sensor 13 to the seal surface 9 by means of a suitable adhesive 19. The tube 3' is of metal, however the embodiment shown here can also be utilised with tubes of any other material, such as for example glass or plastic, or even elastic materials.

Here again the sensor 13 is coupled by electrical connections 15 to a non-depicted evaluating unit or the like, in order to relay and process the values determined by the sensor 13 regarding the property of the fluid 17 present in the tube 3'.

In the embodiment shown in Fig. 3 the cross-section of the tube 3' expands in the region of the arrangement, while the cross-section of the tube 3 of the first embodiment shown in Fig. 1 narrows in the region of the arrangement. Thus, the flow velocity of a fluid 17 flowing in the arrangement according to the first embodiment increases, while the flow velocity of a fluid 17 flowing in the arrangement according to the second embodiment decreases. This can influence the property of the fluid 17 to be measured so that, depending on the property of the fluid 17 to be measured, the embodiment that does not, or least, influences the property to be measured is to be selected. Alternatively, however, it is also possible to form the domed wall portion 7 on the tube 3 or 3' such that no or only an extremely small and negligible change in cross-section of the tube 3 or 3' results.

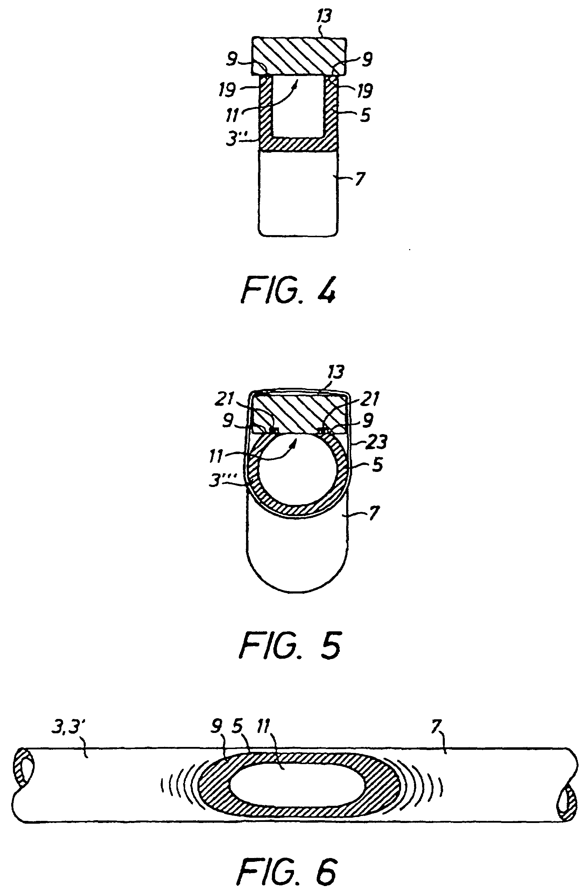

An example of this is shown in Fig. 4 that shows a cross-section through the tube 3" in a similar fashion to Fig. 2. Like parts are denoted by like reference numerals. The tube 3" is rectangular and bent as a whole to form the domed portion 7 in a similar fashion to that shown in Fig. 1. The outer side of the domed portion 7 is completely levelled away up to the side walls to form the lateral access 11, such that the sensor 13 placed thereon takes the place of the original outer side. In this way, the original cross-section is retained.

A further example is shown in Fig. 5, which likewise shows a cross-section through a tube 3"' in a similar fashion to Fig. 2. Here again like parts are denoted by like reference numerals. The tube 3'" comprises a circular cross-section and is bent as a whole to form the domed portion 7, in a similar fashion to that shown in Fig. 1. To form the lateral access 11, the outer side of the domed portion 7 is levelled away to just such an extent that a small opening is formed in the wall 5. This is covered by the sensor 13 placed thereon, the sensor 13 protruding only a little into the tube 3"'. This has the effect that the cross-section of the tube in the region of the measurement arrangement is only slightly, and on the whole negligibly, reduced.

Contrary to the previous embodiments, the sensor 13 is here attached to the seal surface 9 with a holding band 23. The seal between sensor 13 and tube 3, or seal surface 9 respectively, is obtained with a sealing ring 21 in this embodiment.

Fig. 6 shows a plan view of a section along the line A-A in Fig. 1 and Fig. 3. It can be clearly distinguished here that the lateral access 11 is arranged in the seal surface 9 such that it is completely surrounded by the seal surface 9. This enables the simple, safe and reliable seal between the lateral access 11 and the sensor 13, which is not shown here, as described in detail above. The seal surface 9 is formed by the levelling away of wall 5 of the tube 3, 3' along a flat plane, which enables its simple and inexpensive formation. Moreover, in this way a level seal surface is provided that comprises no comers, edges or gaps and thus enables a simple and reliable seal.

Hence all in all an arrangement for measuring a property of a fluid present in a tube is provided that is simple and inexpensive to manufacture and simply and inexpensively enables a reliable sealing of the sensor utilised in the arrangement. The arrangement can be employed for any application and for any apparatus, for example also in dialysis monitors. In the latter, the arrangement could for example be equipped with a conductivity sensor to determine the conductivity of the dialysis fluid. However, this does not limit the arrangement to this purpose.

### LIST OF REFERENCE NUMERALS

- 1: Measuring arrangement
- 3: Tube
- 5: Wall
- 7: Domed wall portion
- 9: Seal surface
- 11: Lateral access
- 13: Sensor
- 15: Electrical connection
- 17: Fluid
- 19: Adhesive
- 21: Sealing ring
- 23: Holding band

## Claims

1. Arrangement for measuring a property of a fluid (17) present in a tube (3),
with a sensor (13) for measuring the property, which sensor (13) is disposed on the tube (3) and is in direct contact with the fluid (17) through a lateral access (11),
**characterised in that** the tube (3) comprises a domed wall portion (7),
the domed wall portion (7) has a seal surface (9) on its outer side,
the lateral access (11) is arranged in the seal surface (9),
and the sensor (13) is arranged in a sealed manner on the seal surface (9) over the lateral access (11).

2. Arrangement according to claim 1, **characterised in that** the seal surface (9) is a level surface.

3. Arrangement according to claim 1 or 2, **characterised in that** the whole tube (3) is bent to form the domed wall portion (7).

4. Arrangement according to claim 1 or 2, **characterised in that** the wall (5) of the tube (3) is bulged outwardly on one side of the tube (3) to form the domed wall portion (7).

5. Arrangement according to any one of the previous claims, **characterised in that** the wall (5) of the tube (3) forms the seal surface.

6. Arrangement according to any one of the previous claims, **characterised in that** the sensor (13) is adhered on to the seal surface (9).

7. Arrangement according to any one of the previous claims, **characterised in that** the sensor is a temperature sensor, a pressure sensor, a flow meter or a conductivity sensor (13).

8. Arrangement according to any one of claims 2 to 7, **characterised in that** the lateral access (11) is formed by levelling away of the wall (5) of the tube (3) on the outer side of the domed wall portion (7) along a flat plane.

9. Arrangement according to claim 8, **characterised in that** the lateral access (11) is formed by grinding.

10. Arrangement according to any one of the previous claims, **characterised in that** the tube (3) is elastic and/or flexible.

11. Arrangement according to any one of claims 1 to 9, **characterised in that** the tube (3) is rigid.

12. Arrangement according to claim 11, **characterised in that** the tube (3) is of metal, plastics or glass.

13. Dialysis monitor with an arrangement according to any one of the previous claims.

## Patentansprüche

1. Anordnung zum Messen einer Eigenschaft eines in einer Röhre (3) vorhandenen Fluids (17)
mit einem Sensor (13) zum Messen der Eigenschaft, wobei der Sensor (13) an der Röhre (3) angeordnet ist und durch einen seitlichen Zugang (11) in direktem Kontakt mit dem Fluid (17) steht,
**dadurch gekennzeichnet, dass** die Röhre (3) einen bauchigen Wandabschnitt (7) umfasst, wobei der bauchige Wandabschnitt (7) eine Dichtfläche (9) an seiner Außenseite aufweist,
der seitliche Zugang (11) in der Dichtfläche (9) angeordnet ist, und der Sensor (13) auf eine abgedichtete Weise an der Dichtfläche (9) über dem seitlichen Zugang (11) angeordnet ist.

2. Anordnung nach Anspruch 1,
**dadurch gekennzeichnet, dass** die Dichtfläche (9) eine ebene Fläche ist.

3. Anordnung nach Anspruch 1 oder 2,
**dadurch gekennzeichnet, dass** die gesamte Röhre (3) gebogen ist, um den bauchigen Wandabschnitt (7) zu bilden.

4. Anordnung nach Anspruch 1 oder 2,
**dadurch gekennzeichnet, dass** die Wand (5) der Röhre (3) auf einer Seite der Röhre (3) nach außen gewölbt ist, um den bauchigen Wandabschnitt (7) zu bilden.

5. Anordnung nach einem der vorhergehenden Ansprüche,
**dadurch gekennzeichnet, dass** die Wand (5) der Röhre (3) die Dichtfläche bildet.

6. Anordnung nach einem der vorhergehenden Ansprüche,
**dadurch gekennzeichnet, dass** der Sensor (13) an die Dichtfläche (9) geklebt ist.

7. Anordnung nach einem der vorhergehenden Ansprüche,
**dadurch gekennzeichnet, dass** der Sensor ein Temperatursensor, ein Drucksensor, ein Durchflussmesser oder ein Leitfähigkeitssensor (13) ist.

8. Anordnung nach einem der Ansprüche 2 bis 7,
**dadurch gekennzeichnet, dass** der seitliche Zugang (11) durch planes Abtragen der Wand (5) der Röhre (3) an der Außenseite des bauchigen Wandabschnitts (7) entlang einer flachen Ebene gebildet ist.

9. Anordnung nach Anspruch 8,
**dadurch gekennzeichnet, dass** der seitliche Zugang (11) durch Schleifen gebildet ist.

10. Anordnung nach einem der vorhergehenden Ansprüche,
**dadurch gekennzeichnet, dass** die Röhre (3) elastisch und/oder flexibel ist.

11. Anordnung nach einem der Ansprüche 1 bis 9,
**dadurch gekennzeichnet, dass** die Röhre (3) starr ist.

12. Anordnung nach Anspruch 11,
**dadurch gekennzeichnet, dass** die Röhre (3) aus Metall, Kunststoff oder Glas besteht.

13. Dialyseüberwachungsgerät mit einer Anordnung nach einem der vorhergehenden Ansprüche.

## Revendications

1. Système de mesure de la propriété d'un fluide (17) présent dans un tube (3),
avec un capteur (13) pour mesurer la propriété, lequel capteur (13) est placé sur le tube (3) et est en contact direct avec le fluide (17) à travers un accès latéral (11),
**caractérisé en ce que** le tube (3) comprend une portion de paroi bombée (7),
la portion de paroi bombée (7) a une surface de soudure (9) sur son côté extérieur,
l'accès latéral (11) est disposé dans la surface de soudure (9),
et le capteur (13) est disposé d'une manière scellante sur la surface de soudure (9) par-dessus l'accès latéral (11).

2. Système selon la revendication 1, **caractérisé en ce que** la surface de soudure (9) est une surface plane.

3. Système selon la revendication 1 ou 2, **caractérisé en ce que** le tube (3) entier est plié pour former la portion de paroi bombée (7).

4. Système selon la revendication 1 ou 2, **caractérisé en ce que** la paroi (5) du tube (3) est bombée vers l'extérieur sur un côté du tube (3) pour former la portion de paroi bombée (7).

5. Système selon l'une quelconque de revendications précédentes, **caractérisé en ce que** la paroi (5) du tube (3) forme la surface de soudure.

6. Système selon l'une quelconque des revendications précédentes, **caractérisé en ce que** le capteur (13) est collé sur la surface de soudure (9).

7. Système selon l'une quelconque des revendications précédentes, **caractérisé en ce que** le capteur est un capteur de température, un capteur de pression, un dispositif de mesure d'écoulement ou un capteur de conductivité (13).

8. Système selon l'une quelconque des revendications 2 à 7, **caractérisé en ce que** l'accès latéral (11) est formé par nivelage de la paroi (5) du tube (3) sur le côté extérieur de la portion de paroi bombée (7) le long d'un plan plat.

9. Système selon la revendication 8, **caractérisé en ce que** l'accès latéral (11) est formé par abrasion.

10. Système selon l'une quelconque des revendications précédentes, **caractérisé en ce que** le tube (3) est élastique et / ou flexible.

11. Système selon l'une quelconque des revendications 1 à 9, **caractérisé en ce que** le tube (3) est rigide.

12. Système selon la revendication 11, **caractérisé en ce que** le tube (3) est constitué de métal, de plastique ou de verre.

13. Dispositif de surveillance de dialyse muni d'un système selon l'une quelconque des revendications précédentes.
